# EUROPÄISCHE PATENTANMELDUNG

(11) **EP 3 985 463 A1**
(43) Veröffentlichungstag der Anmeldung: **20.04.2022**
(21) Anmeldenummer: 21202498.8
(22) Anmeldetag: 13.10.2021
(51) Int. Cl.: G05B 19/042

(54) **MASCHINENANLAGE**

(30) Priorität: 16.10.2020 DE 102020127282
(71) Anmelder: MULTIVAC Sepp Haggenmüller SE & Co. KG, 87787 Wolfertschwenden (DE)
(72) Erfinder: Spix, Guido, 89079 Ulm (DE); Grathwohl, Marius, 89250 Senden (DE); Botzenhardt, Claus, 87439 Kempten (DE); Baur, Thomas, 87474 Buchenberg (DE)
(74) Vertreter: Grünecker Patent- und Rechtsanwälte PartG mbB

(57) **Zusammenfassung**

Die Erfindung betrifft eine Maschinenanlage, insbesondere Verpackungs- und/oder Verarbeitungsmaschine, welche wenigstens eine Eingabe-/Abrufeinrichtung zur Eingabe einer ersten Gruppe von Parametern eines vollständigen, die erste Gruppe und zumindest eine zweite Gruppe von Parametern umfassenden Parametersatzes als Einstellparameter zum Betreiben der Maschine aufweist. Die zweite Gruppe von Parametern ist der Eingabe-/Abrufeinrichtung aus dem Internet übermittelbar, wobei Anzahl und/oder Änderung der Parameter der ersten Gruppe über das Internet auswähl-/ oder vorgebbar sind. Dadurch wird eine entsprechende Maschinenanlage dahingehend verbessert, dass einem Benutzer der Maschinenanlage Einschränkungen bei der Einstellung seiner Maschinenanlage vorgegeben werden können, um bspw. ein Nutzungs- und/oder Funktionsbasiertes Abrechnungsmodell zu ermöglichen.

## Beschreibung

Die Erfindung betrifft eine Maschinenanlage, insbesondere Verpackungs- und/oder Verarbeitungsmaschine. Die Maschinenanlage kann eine oder mehrere dieser Maschinen umfassen, wobei eine Maschinenanlage auch eine Aneinanderreihung von Verpackungs- oder Verarbeitungsmaschinen oder auch anderen Maschinen ist.

Eine entsprechende Maschinenanlage ist bspw. in der DE 10 2017 130 111 A1 beschrieben. Die Maschinenanlage umfasst dabei eine Verpackungsmaschine, die unter anderem eine Maschinensteuerung und eine Eingabe-/Abrufeinrichtung aufweist. Die Eingabe-/Abrufeinrichtung ist als graphische Bedieneroberfläche auf einer Anzeigevorrichtung ausgebildet, um Parameter, die als Einstellparameter zum Betreiben der entsprechenden Maschinenanlage dienen, dem Bediener anzuzeigen oder durch diesen zu ändern. Es besteht dabei die Möglichkeit, dass eine benötigte Visualisierungssoftware aus dem Internet und insbesondere einer Cloud heruntergeladen und mittels der Anzeigevorrichtung als entsprechende graphische Bedieneroberfläche dargestellt wird.

Weiterhin ist eine entsprechende Maschinenanlage und insbesondere Verpackungsmaschine aus der WO 2017/021556 bekannt. Die entsprechende Verpackungsmaschine weist einen sogenannten Rezeptgenerator auf, der ein Regelwerk zur Bestimmung von Rezeptvariablen für einen Einstellvorgang der Verpackungsmaschine umfasst und insbesondere dazu ausgebildet ist, anhand einer Vielzahl von Informationen bezüglich eines herzustellenden Produkts, eines Verpackungstyps dafür, mindestens eines eingesetzten Werkzeugs der Verpackungsmaschinen usw. Rezeptvariablen zu erzeugen und daraus einen Rezeptdatensatz für einen Einstellvorgang der Verpackungsmaschine zu bilden. Der Rezeptgenerator ist bspw. in einem Server- oder Cloud-System integriert und für einen Einstellvorgang mit einem Prozessparametergenerator einer Steuereinheit der Verpackungsmaschine verbindbar.

Im Hinblick auf den vorangehend genannten Stand der Technik liegt vorliegender Erfindung die Aufgabe zugrunde, eine entsprechende Maschinenanlage dahingehend zu verbessern, dass einem Benutzer der Maschinenanlage Einschränkungen bei der Einstellung seiner Maschinenanlage vorgegeben werden, um bspw. ein nutzungs- und/oder funktionsbasiertes Abrechnungsmodell zu ermöglichen.

Diese Aufgabe wird durch die Merkmale des Patentanspruchs 1 gelöst.

Erfindungsgemäß werden die Parameter eines Parametersatzes, der die Einstellparameter zum Betreiben der Maschinenanlage umfasst, in eine erste Gruppe und eine zweite Gruppe von Parametern unterteilt. Die entsprechende Eingabe-/Abrufeinrichtung der Maschinenanlage dient zur Eingabe der ersten Gruppe von Parametern während die zweite Gruppe von Parametern der Eingabe-/Abrufeinrichtung aus dem Internet übermittelbar ist und wobei Anzahl und/oder Änderung der Parameter der ersten Gruppe über das Internet auswählbar und/oder vorgebbar sind.

Das heißt, dass die zweite Parametergruppe bzw. das Auswählen und Vorgeben der ersten Parametergruppe von Seiten bspw. des Herstellers der Maschinenanlage durchgeführt wird. Dies dient dazu, ein entsprechendes nutzungs- und/oder funktionsbasiertes Abrechnungsmodell zu realisieren. Ein solches Abrechnungsmodell ist insbesondere von Vorteil bei gemieteten oder geleasten Maschinenanlagen, die nur in bestimmter Art und Weise vom Betreiber der Maschinenanlage eingesetzt werden sollen. Es besteht bspw. die Möglichkeit, dass eine entsprechende Abrechnung der Nutzung der Maschinenanlage pro durchgeführtem Takt pro produzierter Verpackung und/oder basierend auf dem Verbrauch von Packstoffen und/oder basierend auf dem Verbrauch von Etiketten und/oder auf der Grundlage vergleichsbasierter Kennzahlen erfolgt. Ebenso kann die entsprechende Abrechnung funktionsbasiert erfolgen, d.h. es erfolgt eine Bezahlung pro Anzahl/Häufigkeit genutzter Funktionen einer Maschine, pro Anzahl/Häufigkeit angewandter Prozesse auf einer solchen Maschine oder auch leistungsbasiert entsprechend pro Packung und pro Minute oder Verpackungsleistung pro Tag/Woche oder Monat.

Das heißt, über die zweite Parametergruppe oder die Auswähl- und/oder Vorgebbarkeit der ersten Parametergruppe direkt aus dem Internet kann dem Benutzer der Maschinenanlage eine entsprechende Vorgabe zur Nutzung der Maschinenanlage vorgegeben werden. Das heißt, die erste Parametergruppe kann von Seiten des Betreibers bspw. nur dazu verwendet werden, mittels der Eingabe-/Abrufeinrichtung einige wenige Einstellparameter zu verändern, während die weiteren Einstellparameter, d.h. die zweite Parametergruppe, aus dem Internet oder einer entsprechenden Cloud unter Berücksichtigung der ersten Parametergruppe vorgegeben und dem Betreiber der Maschinenanlage zur Verfügung gestellt wird. Nur durch die erste Parametergruppe und die zweite Parametergruppe ergibt sich der vollständige Parametersatz zum Betreiben der Maschine. Daher besteht die Möglichkeit, die Anzahl der Parameter der ersten Parametergruppe, d.h., der Parameter, die an der Eingabe-/Abrufeinrichtung an der Maschine selber einstellbar sind, einzuschränken oder ggf. entsprechende Änderungen bzw. Veränderungen der entsprechenden ersten Parametergruppe einzuschränken. Diese Einschränkungen betreffen bspw. die erlaubte Nutzung der entsprechenden Maschinenanlage wie oben ausgeführt, siehe Anzahl der durchgeführten Takte, Anzahl der produzierten Gutpackungen und dergleichen.

Dabei ist es weiterhin von Vorteil, wenn bei fehlender Internetverbindung die Maschinenanlage nur beschränkt einsetzbar oder ausgeschaltet ist. Das heißt, in der Regel ist die Maschinenanlage nur mit einem permanenten Internetanschluss betreibbar und ohne eine solche Internetverbindung nur beschränkt oder nicht mehr betriebsfähig. Die beschränkte Betriebsfähigkeit kann darin bestehen, dass die Maschinenanlage nur eine vorab festgelegte Leistung erbringen kann und/oder nur mit bestimmten Packstoffen und/oder Etiketten betrieben werden kann.

Weiter als günstig kann angesehen werden, wenn bei bestehender Internetverbindung Eingabeseiten auf der Eingabe-/Abrufeinrichtung darstellbar sind, die insbesondere aus dem Internet von einem externen Server herunterladbar sind. Diese spezifischen Eingabeseiten werden mittels eines Webbrowsers der Eingabe-/Abrufeinrichtung geladen und dazu benutzt, eine Interaktion mit der Maschinenanlage zu ermöglichen sowie Einstellparameter der Maschinensteuerung initial festzulegen oder zu verändern.

Als weiterer Vorteil kann betrachtet werden, wenn die Parameter der zweiten Gruppe zur Interaktion mit der Maschine und/oder zur Auswahl bzw. Veränderung der Parameter der ersten Gruppe einsetzbar sind. Das heißt, in diesem Fall dient direkt die zweite Parametergruppe zur Auswahl oder Veränderung der ersten Parametergruppe oder zur bestimmten Interaktion mit der Maschinenanlage, um bspw. Maschineneinstellungen zu erzeugen bzw. zu verändern.

Dabei kann es sich weiterhin als vorteilhaft erweisen, wenn durch die Parameter der zweiten Gruppe eine Nutzung der Maschinenanlage festgelegt ist. Eine solche Nutzung betrifft bspw. eine bestimmte Anzahl produzierter Packungen, eine bestimmte Anzahl bzw. Häufigkeit eines Funktionsaufrufs und dergleichen. Das heißt, im Wesentlichen alle Nutzungen oder Funktionen der Maschinenanlage sind durch die Parameter der zweiten Gruppe festgelegt.

Es kann weiterhin als günstig erachtet werden, wenn mittels Eingabeseiten eine Interaktion mit der Maschinenanlage oder Einstellwerte einer Maschinensteuerung festlegbar oder Parameter der ersten Gruppe veränderbar sind. Diese Eingabeseiten werden entsprechend aus dem Internet von einem externen Server heruntergeladen. Der externe Server kann dabei dem Hersteller der Maschinenanlage zugeordnet sein. Das heißt, durch die spezifische Eingabeseite sind für den Benutzer der Maschinenanlage nur bestimmte Parameter auswähl- oder veränderbar. Dies sind die Parameter der ersten Parametergruppe.

Dabei ist weiterhin zu beachten, dass bspw. keine solche weiteren Einstellungen ohne Internetverbindung erzeugt bzw. verändert werden können, siehe auch die obigen Ausführungen.

Dabei kann es in diesem Zusammenhang ebenfalls günstig sein, wenn die Eingabeseiten insbesondere lokal instanziiert oder aktualisierbar sind. Das heißt, Eingabeseiten sind bei einem Betrieb ohne Internetverbindung bei Bedarf zeitlich limitiert, d.h. sie sind lokal instanziiert, wobei allerdings die Eingabeseiten auch für einen Betrieb mit Internetverbindung jeweils aktualisiert werden können, um neue Einstellungen oder Funktionen zu ermöglichen oder auch Einstellungen oder Funktionen der Maschinenanlage zu deaktivieren.

Es besteht weiterhin die Möglichkeit, dass die Parameter der ersten Gruppe in Abhängigkeit der Parameter der zweiten Gruppe berechenbar und/oder vorgebbar sind.

Weiterhin ist es ggf. günstig, wenn Veränderungen von Einstellparametern der Maschinenanlage mittels der Eingabe-/Abrufeinrichtung eingeschränkt sind und insbesondere ohne Internetverbindung unveränderbar sind. Dies gewährleistet entsprechend eine dem Benutzer der Maschinenanlage erlaubte Nutzung oder Funktion der Maschine, wie bereits oben ausgeführt.

In diesem Zusammenhang kann es weiterhin vorteilhaft sein, wenn die Maschinenanlage für eine vorgegebene Zeit und/oder Nutzung eingeschaltet und bei fehlender Rückmeldung aus dem Internet ausgeschaltet ist. Das heißt, die Maschinenanlage wird bspw. nach vorgegebener Zeit oder vorgegebener Nutzung, siehe bspw. eine bestimmte Anzahl produzierter Packungen oder eine bestimmte Anzahl bzw. Häufigkeit eines Funktionsaufrufs, ohne entsprechende Rückmeldung aus dem Internet angehalten, wobei dies nach einer entsprechend vorgegebenen Zeit erfolgen kann.

Um dies entsprechend auch auf Seiten der Maschinenanlage zu hinterlegen, besteht die Möglichkeit, dass die Maschinenanlage einen Lizenzbaustein beispielsweise in der Maschinensteuerung und/oder in einem separaten Steuerungsmodul zur Bereitstellung einer vorab festgelegten Begrenzung von Zeit oder Nutzung aufweist und Informationen zu vorbestimmten Betriebsmitteln im Lizenzbaustein bzw. im Internet hinterlegt sind. Das heißt, die jeweils vorgegebene Zeit oder Nutzung ist als Lizenzbaustein in der Maschinensteuerung oder in einem separaten Steuerungsmodul der Maschine hinterlegt. Dieses separate Steuerungsmodul kann bspw. ein sogenanntes Edge-Device sein, welches bspw. zum Zugang zu einem entsprechenden Netzwerk eines Serviceproviders, wie des Maschinenanlagenherstellers, dient. Das heißt, bis zum Ablauf der vorgegebenen Zeit oder vorgegebenen Nutzung kann die Maschine ohne Änderung der entsprechenden Einstellparameter weiterproduzieren und erst nach einer entsprechenden vorgegebenen Nutzung, siehe bspw. bestimmte Anzahl produzierter Packungen, bestimmte Anzahl bzw. Häufigkeit eines Funktionsaufrufs oder dergleichen, erfolgt bspw. ein Anhalten der Maschinenanlage.

Wie bereits vorangehend beschrieben, erweist es sich in diesem Zusammenhang als günstig, wenn die Einstellparameter bzw. Parameter zumindest der ersten Parametergruppe bis zum Ausschalten der Maschinenanlage unveränderbar sind. Diese Unveränderbarkeit betrifft eine entsprechende Veränderung ggf. durch den Benutzer der Maschinenanlage direkt mittels der Eingabe-/Abrufeinrichtung.

Dadurch kann verhindert werden, dass die Maschinenanlage für andere Nutzungen oder Funktionen verwendet wird. Weiterhin kann es in diesem Zusammenhang günstig sein, wenn die Freigabe der Maschinenanlage insbesondere automatisiert von einem externen Server über das Internet durchführbar ist. Das heißt, nach einem entsprechenden Ausschalten kann die Freigabe der Maschinenanlage nur extern erfolgen, d.h. über eine Verbindung bzw. Abfrage der Maschinensteuerung bzw. vom Steuerungsmodul der Maschinenanlage mit einem definierten Datenendpunkt auf dem externen Server, indem bspw. der entsprechende Lizenzbaustein mit dem externen Server synchronisiert wird.

Dabei ist es weiterhin von Vorteil, wenn nach vorgegebener Zeit und/oder vorgegebener Nutzung der Maschinenanlage diese in einen Ruhemodus geschaltet ist, indem insbesondere Einstellwerte der Maschinenanlage in einen Anfangszustand zurückgesetzt und/oder eine Ablaufsteuerung der Maschinenanlage gesperrt ist. Dies bedeutet insbesondere, dass die Maschinenanlage dann nach bspw. einer bestimmten Anzahl von Packungen, einer bestimmten Anzahl bzw. Häufigkeit eines Funktionsaufrufs an der Maschinenanlage oder dergleichen ohne Rückmeldung vom Internet alle entsprechenden Einstellwerte bzw. auf "0" setzt und/oder die Ablaufsteuerung an der Maschinenanlage gesperrt ist und/oder durch Einblenden eines Sperrbildschirms an der Eingabe-/Abrufeinrichtung durch modifizierte Berechtigung und Steuerung weitere Veränderungen von Maschineneinstellungen verhindert werden und die Maschine zur Verhinderung von Verletzungen und Gefahren für einen Bediener in einen sicheren Modus wechselt. Die in diesem Zusammenhang vorgegebene Zeit oder die vorgegebenen Nutzungskomponenten sind entsprechend als Lizenzbaustein in der Maschinensteuerung oder einem separaten Steuerungsmodul der Maschine hinterlegt. Es besteht weiterhin die Möglichkeit, dass die Maschinenanlage auf eine bestimmte Anzahl von Funktionen oder Prozessen limitiert ist, oder bestimmte Anzahlen von Funktionen oder Prozessen betrifft bspw. eine bestimmte Anzahl von Packungen, die durch die Maschinenanlage hergestellt werden, die Durchführung einer bestimmten Anzahl an Takten oder die Anzahl bzw. Häufigkeit von Aufrufen von Funktionen bzw. Prozessen auf der Maschinenanlage.

Dabei ist es weiterhin von Vorteil, wenn die Maschinenanlage eine Protokolleinrichtung zur Protokollierung mit ggf. einem Zeitstempel insbesondere für Nutzungen der Maschinenanlage aufweist, wobei die Protokollierungsergebnisse an einen externen Server übermittelbar sind. Das heißt, die Maschinenanlage protokolliert eine entsprechend definierte Nutzungskennzahl, z. B. Packungen, Takte, Funktionen, Prozesse oder dergleichen und sendet diese zusammen mit einem Zeitstempel eines insbesondere anerkannten, internetbasierten Zeitservers an den externen Server.

Es besteht weiterhin die Möglichkeit, dass entsprechend vorab definierte Ergänzungen von bspw. Nutzung, siehe bspw. Packung, Takte, Funktionen, Prozesse und dergleichen, als Lizenzbaustein auf der Maschinenanlage oder in einem separaten Steuerungsmodul der Maschinenanlage hinterlegt sind und die Maschine auch ohne Internetverbindung ständig die entsprechende Information des Lizenzbausteins mit dem entsprechenden Nutzungsprotokoll abgleicht und beim Überschreiten eines zulässigen Limits einer Nutzung die Maschine anhält.

In diesem Zusammenhang kann es sich weiterhin als günstig erweisen, wenn ebenfalls in der Maschinensteuerung hinterlegt ist, dass die Maschine nur mit definierten Packstoffen, Etiketten oder anderen Betriebsmitteln betrieben werden kann, indem Packstoffe, Etiketten oder andere Betriebsmittel eindeutig durch die Maschine erkannt und identifiziert werden können, siehe bspw. RFID-Technologie oder sensortechnische Erfassung von Folienmaterial oder auch optische Erkennung eindeutiger Identifikatoren, wie QR-Codes. Auch solche Informationen über die auf der Maschinenanlage zulässigen Betriebsmittel, siehe Packstoffe, Etiketten oder weitere Betriebsmittel, können als Teil des Lizenzbausteins auf der Maschinenanlage oder in einem separaten Steuerungsmodul der Maschinenanlage hinterlegt. Erfolgt ein Wechsel eines Betriebsmittels kann die Maschinenanlage einen Abgleich des neuen Betriebsmittels mit den auf den Lizenzbausteinen hinterlegten und zugelassenen Betriebsmitteln vornehmen und die Maschinenanlage anhalten, falls das neue verwendete Betriebsmittel nicht einem auf dem Lizenzbaustein hinterlegten Betriebsmittel entspricht. Weiterhin besteht die Möglichkeit, dass dem Betreiber der Maschinenanlage bspw. vom Maschinenanlagenhersteller ein definierter Preisvorteil bei der Nutzung der Maschine gewährt wird, sofern er nur Betriebsmittel einsetzt, die auf dem Lizenzbaustein hinterlegt sind.

Als weiterer Vorteil könnte gelten, dass eine neue Lizenz zur Benutzung der Maschinenanlage aus dem Lizenzbaustein herunterladbar oder auf diesen ladbar ist. Dies bedeutet, dass der Betreiber der Maschinenanlage bspw. eine neue Lizenz mittels der Eingabe-/Abrufeinrichtung erwerben kann und diese entsprechend mit Lizenzbausteinen hinterlegbar ist. Der Erwerb der Lizenz kann bspw. durch eine übliche Abrechnungsform, wie Kreditkarte oder dergleichen erfolgen. Ein solcher Erwerb einer neuen Lizenz kann bspw. auch im Offlinebetrieb der Maschinenanlage möglich sein, wobei dann im entsprechenden Onlinebetrieb der Lizenzbaustein mit der hinterlegten neuen Lizenz mit dem externen Server synchronisiert.

Insgesamt ergibt sich erfindungsgemäß eine neue Art von Maschinenanlage, die verschiedene Parametersätze aufweist, wobei einer dieser Parametersätze dafür verwendet wird, ein spezifisches Abrechnungsmodell für die Verwendung der Maschinenanlage zu ermöglichen. Dieses Abrechnungsmodell ist nutzungs- und/oder funktionsbasiert, wie vorangehend beschrieben, und kann ein Mieten oder Leasen der Maschinenanlage betreffen. Durch die verschiedenen Parametersätze besteht die Möglichkeit, dass bspw. der Vermieter oder Verleaser eine entsprechende Bezahlung in Relation zur Nutzung der Funktion und Anzahl/Häufigkeit angewendeter Prozesse der Maschine einfordert. Weiter ist der Benutzer der Maschinenanlage nicht in der Lage, ohne entsprechende Internetverbindung und Rückmeldung über das Internet die Maschine weiterzubetreiben, in anderer Weise zu betreiben oder bspw. mit anderen Betriebsmitteln zu verwenden. Es erfolgt insgesamt eine Überwachung der Maschinenanlage vom Vermieter oder Verleaser wodurch das gesamte Abrechnungsmodell effizient durchführbar ist und dem Nutzer der Maschinenanlage kaum Möglichkeiten gegeben sind, die Maschinenanlage außerhalb der vorgegebenen Lizenz einzusetzen und zu benutzen.

Im Folgenden wird die Erfindung anhand der in der Zeichnung beigefügten Figur näher erläutert.

Es zeigt:

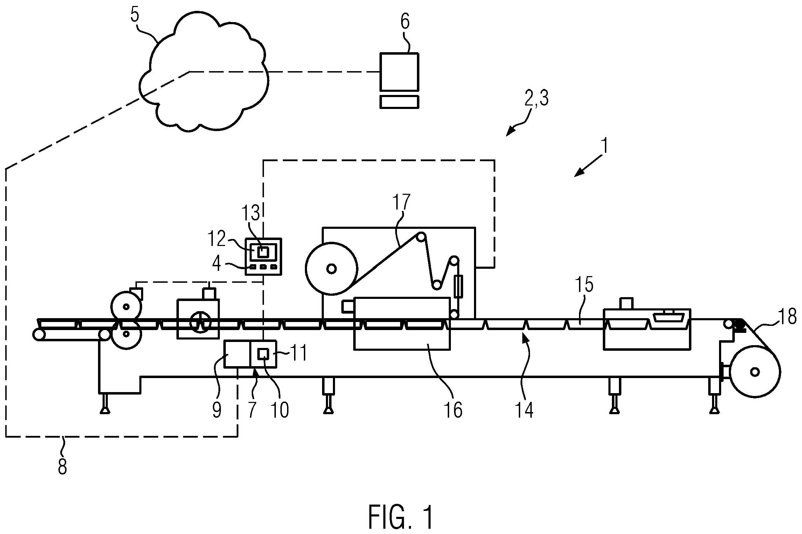

- Figur 1: eine Prinzipdarstellung einer Maschinenanlage gemäß vorliegender Erfindung.

Figur 1 zeigt eine seitliche Prinzipdarstellung einer Maschinenanlage 1, in diesem Fall einer Verpackungsmaschine 2. Es sei allerdings darauf hingewiesen, dass die Erfindung nicht nur eine einzelne Verpackungsmaschine betrifft, sondern auch eine Aneinanderreihung von Maschinen zu einer Anlage bzw. Linie von mehreren Maschinen, wie bspw. Verpackungs- und Verarbeitungsmaschinen und dergleichen.

Die in Figur 1 dargestellte Verpackungsmaschine 2 weist bspw. eine Unterfolie 18 auf, die von einer Rolle zugeführt wird und aus der eine Anzahl von Verpackungsteilen 15 gebildet werden. Diese werden entlang einer Einlegestrecke 14 bewegt, in der ein Produkt in die Verpackungsteile 15 eingelegt wird. In einer Kammer 16 erfolgt ein Aufsiegeln einer Oberfolie 17 ebenfalls von einer entsprechenden Rolle, sodass insgesamt eine geschlossene Verpackung mit einem in dieser befindlichen Produkt weiter transportiert wird. Die entsprechenden Verpackungen werden dann voneinander getrennt und weiter transportiert. Die Verpackungsmaschine 2, die ebenfalls eine entsprechende Verarbeitungsmaschine 3 sein kann, bildet dabei einen Teil der entsprechenden Maschinenanlage 1. Der Verpackungsmaschine 2 ist eine Maschinensteuerung 7 zugeordnet, die eine Protokolleinrichtung 9 und bspw. ein Lizenzbaustein 10 als Teil der Maschinensteuerung oder als separates Steuerungsmodul 11 aufweist. Weiterhin umfasst die Verpackungsmaschine 2 eine Eingabe-/Abrufeinrichtung 4 mit einer Visualisierungssoftware 12 zur Darstellung von Eingabeseiten 13. Die Verpackungsmaschine 2 und insbesondere die Maschinensteuerung 7 ist über eine Internetverbindung 8 mit dem Internet 5 verbunden, mit welchem ebenfalls ein externer Server 6 verbunden ist.

Zum Betreiben der Maschinenanlage oder der in Figur 1 dargestellten Verpackungsmaschine sind eine Reihe von Einstellparametern erforderlich, die erfindungsgemäß zumindest zwei Gruppen von Parametern umfassen. Eine erste Gruppe von Parametern kann an der Eingabe-/Abrufeinrichtung eingegeben werden. Eine zweite Gruppe von Parametern wird vom Internet übermittelt, wobei dann erste Parametergruppe und zweite Parametergruppe einen vollständigen Parametersatz bilden, der insgesamt die zum Betreiben der Maschinenanlage notwendigen Einstellparameter umfasst.

Die erste Parametergruppe umfasst einige Parameter, die von einem Benutzer der Maschinenanlage an der Eingabe-/Abrufeinrichtung 4 eingebbar sind, wobei diese Eingabe-/Abrufeinrichtung bspw. entsprechende Eingabeseiten 13 als Teil einer Visualisierungssoftware 12 aufweist. Die entsprechenden Visualisierungen können in Form von HTML-Seiten aus dem Internet bzw. der Cloud heruntergeladen werden und dann entsprechend die Eingabe der ersten Parametergruppe erfolgen. Allerdings nur zusammen mit der zweiten Parametergruppe ergibt sich der vollständige Parametersatz zum Betreiben der Maschinenanlage. Dabei ist die Anzahl und/oder Änderung der ersten Parametergruppe ggf. einstellbar bzw. eingeschränkt und insbesondere bei einer fehlenden Internetverbindung kann eine Eingabe der ersten Parametergruppe unwirksam geschaltet sein, sodass ggf. die Maschinenanlage nur beschränkt einsetzbar oder auch ausgeschaltet ist. Dies kann bspw. nach vorgegebener Zeit ohne Rückmeldung aus dem Internet erfolgen, sodass nach dieser vorgegebenen Zeit erst die Maschinensteuerung die Maschinenanlage anhält. Eine erneute Freigabe der Maschinenanlage ist ohne Rückmeldung aus dem Internet nicht möglich, sondern kann nur online bspw. von einem externen Server 6 über das Internet 5 und entsprechend über eine Internetverbindung 8 erfolgen. Weiterhin kann die entsprechende Deaktivierung der Maschinenanlage nicht nur dann erfolgen, wenn diese offline ist, sondern ggf. auch in Abhängigkeit von einer Lizenzprüfung mittels eines entsprechenden Lizenzbausteins 10, der Teil der Maschinensteuerung 7 oder eines separaten Steuerungsmoduls 11 ist. Dies realisiert ein sogenanntes "Pay-per-Use"-Abrechnungsmodell, wodurch bspw. die Möglichkeit besteht, die Maschinenanlage zeitlich begrenzt, nur für bestimmte Nutzungen oder Anzahl von Nutzungen, bestimmte Prozesse oder dergleichen zu verwenden. Außerdem wird durch dieses Pay-per-Use-Abrechnungsmodell die Anzahl von durchgeführten Takten, von produzierten Verpackungen, des Verbrauchs von Betriebsmitteln und dergleichen festgelegt. Daher kann eine entsprechende Bezahlung auf der Grundlage der entsprechenden Nutzung, genutzter Funktionen oder Anzahl/Häufigkeit angewandter Prozesse der Maschinenanlage berechnet werden. Dazu dient entsprechend, dass ein Betreiben der Maschinenanlage nur bei einer vorhandenen Internetverbindung möglich ist, sodass ohne eine entsprechende Internetverbindung die Maschinenanlage nicht mehr betriebsfähig ist oder nur noch beschränkt betriebsfähig ist. Die beschränkte Betriebsfähigkeit kann bspw. darin bestehen, dass die Maschinenanlage nur noch eine vorab definierte Leistung und/oder nur noch mit vorbestimmten Betriebsmitteln betrieben werden kann. Erfindungsgemäß wird in Abhängigkeit vom Vorhandensein der Internetverbindung eine entsprechende Eingabeseite an der Eingabe-/Abrufeinrichtung als HMI dargestellt, die dann nur noch bestimmte Interaktionen mit der Maschinenanlage ermöglicht oder nur bestimmte Änderungen von Einstellwerten, siehe erste Parametergruppe, erlaubt oder verbietet.

Ein Einsatz der Maschinenanlage ist erfindungsgemäß daher nur möglich, wenn beide Parametersätze vorliegen, wobei ohne entsprechende Internetverbindung in der Regel keine Maschineneinstellungen erzeugt oder verändert werden können. Erfindungsgemäß sind die entsprechend erlaubten Nutzungen und dergleichen der Maschinenanlage nur erlaubt, solange dies durch den entsprechenden Lizenzbaustein 10 ermöglicht ist. In diesem Lizenzbaustein sind die entsprechenden Nutzungsmöglichkeiten sowohl zeitlich als auch von der Anzahl her hinterlegt und können ggf. durch entsprechendes Erwerben einer neuen Lizenz verlängert oder verändert werden. Der Erwerb der neuen Lizenz kann ebenfalls mittels der Eingabe-/Abrufeinrichtung erfolgen.

Weiterhin wird erfindungsgemäß ermöglicht, dass durch die entsprechende Überprüfung der Maschinenanlage für den Vermieter oder Verleaser in einfacher Weise feststellbar ist, ob eine Wartung notwendig ist, ob Betriebsmittel nachgeliefert werden müssen, ob mit möglichen Ausfällen der Maschinenanlage zu rechnen ist, wodurch insgesamt entsprechende Ausfallzeiten der Maschinenanlage oder gar Stillstände möglichst vermieden werden. Das heißt, durch die entsprechende Anbindung der Maschinenanlage ans Internet und die Verwendung der entsprechenden Parametergruppen besteht ebenfalls die Möglichkeit, Verbrauchs-und andere Daten in Echtzeit zu erfassen, sowie neue Abrechnungsmöglichkeiten beim Mieten und Leasen zu realisieren, die entsprechend nutzungsbasiert, funktionsbasiert oder leistungsbasiert sind.

## Patentansprüche

1. Maschinenanlage, insbesondere Verpackungs- und/oder Verarbeitungsmaschine, welche wenigstens eine Eingabe-/Abrufeinrichtung zur Eingabe einer ersten Gruppe von Parametern eines vollständigen, die erste Gruppe und zumindest eine zweite Gruppe von Parametern umfassenden Parametersatzes als Einstellparameter zum Betreiben der Maschinenanlage aufweist, wobei die zweite Gruppe von Parametern der Eingabe-/Abrufeinrichtung aus dem Internet übermittelbar ist, und wobei Anzahl und/oder Änderungen der Parameter der ersten Gruppe über das Internet auswähl- und/oder vorgebbar sind.

2. Maschinenanlage nach Anspruch 1, wobei diese bei fehlender Internetverbindung nur beschränkt einsetzbar oder ausgeschaltet ist.

3. Maschinenanlage nach Anspruch 1 oder 2, wobei bei bestehender Internetverbindung Eingabeseiten auf der Eingabe-/Abrufeinrichtung darstellbar sind, die insbesondere aus dem Internet von einem externen Server herunterladbar sind.

4. Maschinenanlage nach einem der vorangehenden Ansprüche, wobei die Parameter der zweiten Gruppe zur Interaktion mit der Maschine und/oder zur Auswahl bzw. Veränderung der Parameter der ersten Gruppe einsetzbar sind.

5. Maschinenanlage nach einem der vorangehenden Ansprüche, wobei durch die Parameter der zweiten Gruppe eine Nutzung der Maschinenanlage festgelegt ist.

6. Maschinenanlage nach einem der vorangehenden Ansprüche, wobei mittels Eingabeseiten eine Interaktion mit der Maschinenanlage oder Einstellwerte einer Maschinensteuerung festlegbar oder Parameter der ersten Gruppe veränderbar sind wobei die Eingabeseiten insbesondere lokal instanziiert oder aktualisierbar sind.

7. Maschinenanlage nach einem der vorangehenden Ansprüche, wobei die Parameter der ersten Gruppe in Abhängigkeit der Parameter der zweiten Gruppe berechenbar und/oder vorgebbar sind.

8. Maschinenanlage nach einem der vorangehenden Ansprüche, wobei Veränderungen von Einstellparametern der Maschinenanlage mittels der Eingabe-/Abrufeinrichtung eingeschränkt sind und insbesondere ohne Internetverbindung unveränderbar sind.

9. Maschinenanlage nach einem der vorangehenden Ansprüche, wobei diese für eine vorgegebene Zeit und/oder Nutzung eingeschaltet und bei fehlender Rückmeldung aus dem Internet ausschaltbar ist.

10. Maschinenanlage nach einem der vorangehenden Ansprüche, wobei diese einen Lizenzbaustein und/oder ein separates Steuerungsmodul zur Bereitstellung einer vorab festgelegten Begrenzung von Zeit oder Nutzung aufweist, und insbesondere Daten und Informationen zu vorbestimmten Betriebsmitteln im Lizenzbaustein oder Steuerungsmodul bzw. im Internet hinterlegt sind.

11. Maschinenanlage nach einem der vorangehenden Ansprüche, wobei die Einstellparameter bzw. Parameter zumindest der ersten Parametergruppe bis zum Ausschalten der Maschinenanlage unveränderbar sind.

12. Maschinenanlage nach einem der vorangehenden Ansprüche, wobei diese nach einem Anhalten bzw. Ausschalten über das Internet freizugeben ist, wobei die Freigabe der Maschinenanlage insbesondere automatisiert von einem externen Server über das Internet durchführbar ist.

13. Maschinenanlage nach einem der vorangehenden Ansprüche, wobei nach vorgegebener Zeit und/oder vorgegebener Nutzung der Maschinenanlage diese in einen Ruhemodus geschaltet ist, in dem insbesondere Einstellwerte der Maschinenanlage in einen Anfangszustand rückgesetzt und/oder eine Ablaufsteuerung der Maschinenanlage gesperrt ist.

14. Maschinenanlage nach einem der vorangehenden Ansprüche, wobei diese auf eine bestimmte Anzahl von Funktionen oder Prozessen limitiert ist.

15. Maschinenanlage nach einem der vorangehenden Ansprüche, wobei diese eine Protokolleinrichtung zur Protokollierung mit ggf. einem Zeitstempel insbesondere für Nutzungen der Maschinenanlage aufweist, wobei die Protokollierungsergebnisse an einen externen Server übermittelbar sind.

16. Maschinenanlage nach einem der vorangehenden Ansprüche, wobei eine neue Lizenz zur Benutzung der Maschinenanlage aus einem Lizenzbaustein herunterladbar ist.
